# EUROPEAN PATENT APPLICATION

(11) **EP 2 385 174 A1**
(43) Date of publication of application: **09.11.2011**
(21) Application number: 10466036.0
(22) Date of filing: 27.12.2010
(51) Int. Cl.: E02B 3/12, E02D 17/20, F16B 2/10

(54) **Fastening pin for geosynthetics**

(71) Applicant: Centrum Dopravního Vyzkumu, V.v.i., 636 00 Brno-Lísen (CZ); Univerzita Pardubice, 532 10 Pardubice (CZ)
(72) Inventor: Pospisil, Karel, 616 00 Brno (CZ); Dolezel, Vladimir, 160 00 Praha (CZ)
(74) Representative: Malusek, Jiri

(57) **Abstract**

The fastening pin for geosyntetics containing a shank body part and a head, where the head (3) is created as a flange (4), which is firmly fastened to the shank body part, whereas the head (3) consists of a lid (5), whereas between the flange (4) and the lid (5) a fastening member (10) for their connection is arranged.

## Description

### Background of the invention

The invention concerns the fastening pin for geosyntetics.

### State of the art

Significance of geosyntetics in a ground body is well known for a long time. Except of separation, draining, filtration, and surface anti-erosion protection functions, its reinforcement function is important. Widely used applications of the geosyntetics is reinforcement of road embankments and railway embankments. The reinforcement function of the geosyntetics is to increase a loading capacity of a basic loading surface. Practice experiences show, that without its further position fixation the bedding of geosyntetics is not stable. The geosyntetics can slide, overlap etc.

In US 4,472,086 the geosyntetics is presented, where fibers are in one direction, so in a longitudinal or a transversal direction, additionaly wrapped by another fiber, to make loops at places of knots. It roughs the whole surface, nevertheless even this does not guarantee sufficient fixation, and roughness is not sufficient.

In EP 1 458 912 B1 the geosyntetics is presented, where fibers are made as braids, which are created by several fibers, whereas at places of knots they have a shape of increased round elements. It roughs the whole surface, nevertheless it is not sufficient too. In DE 4123055 the geosyntetics is solved similarly.

In EP 0 333 576 B1 the geosyntetics is presented, where fibers are formed by strips, whereas in one direction the strips are rewound to make spindle sections. An effect of it is, that a part of strips is orientated with an angle to the plain of the geosyntetics. Such production is very difficult, rolls of geosyntetics are more voluminous and fixation is not sufficient.

If the geosyntetics shall increase the loading capacity it has to cooperate with the ground. And if the cooperation of the geosyntetics and ground shall be efficient it is necesary to join them.

In DE 92 15 568 the geosyntetics with fixation is presented, which is intended for stabilisation of a grass embankment, which is made of flat strips provided by flat vertical bucked tips on its upper part. Vertical bucked tips are only out of crossings, where apperture is formed into which a fastening pin is inserted. Such fixation is sufficient, but there is a need for special geosyntetics provided by eyes for anchoring of fastening members and such type is not on the market.

The aim of the present invention is to disclose an all-purpose pin, which is intended for efficient, easy and safety anchoring of the ordinary geosyntetics, consisting of crossing strips.

### Description of the drawings

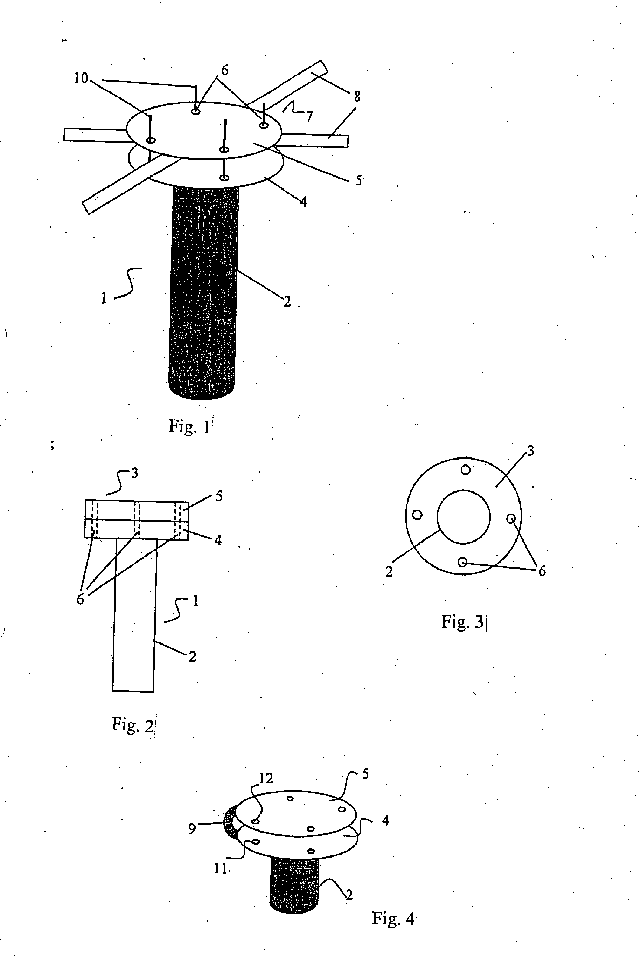

The invention will be further explained by using the drawings, in which Fig. 1 presents an axonometrical view of the pin according to the invention, arranged on the crossing of strips of the geosyntetics, Fig. 2 presents a schematic side view of the pin at Fig. 1, Fig. 3 presents a view from above of the pin in Fig. 2 and Fig. 4 presents an alternative ambodiment of the head part of the pin.

### Feature of the invention

The above mentioned disadvantages are considerably eliminated by use of the fastening pin for geosyntetics containing a shank body part and a head, where the head is created as a flange, which is firmly fastened to the shank body part, whereas the head consists of a lid, whereas between the flange and the lid a fastening member for their connection is arranged.

In an advantageous embodiment the flange and the lid are connected together by swinging joint.

In another advantageous embodiment the shank body part is made as a tube.

In another advantageous embodiment the tube is shaped so as to increase the friction of its surface in the ground

### Preferred embodiments of the invention

An ordinary geosyntetics is used to increase a loading capacity of a ground. For its anchoring a pin, which is presented in Fig. 1 is used. The pin 1 consists of a shank body part, which is constructed as a tube 2 and of a head 3. The head 3 consists of a flange 4, which is fastened to the tube 2, and of a lid 5, which will be described further. The tube 2 of the pin 1 is pushed into the ground. Advantageously a geosyntetics 7 is arranged on the flange 4 so, that a strip crossing 8 is on the flange 4. The geosyntetics 7 is then covered by lid 5 in such a way that appertures 6 of the lid 5 are placed above the appertures 6 of the flange 4, whereas through the appertures 6 a fastening strip or another suitable fastening member 10 is interlaced. Thanks to that, the geosyntetics 7 is firmly fastened to the flange 4 and the tube 2, in other words with the head 3 of the fastening pin 1. The tube 2 can be advantageously formed so as to increase the friction of its surface in the ground.

The fastening member 10 can be designed as well as a strip, which is fixed to the flange 4, whereas the end of it is thermaly spreaded or mechanically fixed after its interlacing through the lid 5. Another way how to firmly fix the lid 5 on the flange 4 is to provide it with projections 11 on the flange 4 and by pits 12 on the lid 5, which interact together. It is shown schematicaly in Fig. 4.

In Fig. 2 a schematic side view of the pin 1 is presented and in Fig. 3 the view from above of the pin 1 is presented, whereas the elements of the pin 1 mentioned above are shown more in detail.

In Fig. 4 an alternative embodiment of the head part of the pin 1 is presented. The flange 4 and the lid 5 are connected by swinging joint 9. Such embodiment decreases the number of free parts, without necessity of separate storing of relative subtile lids 5.

## Claims

1. The fastening pin for geosyntetics containing a shank body part and a head **characterized in that**, the head (3) is created as a flange (4), which is firmly fastened to the shank body part, whereas the head (3) consists of a lid (5), whereas between the flange (4) and the lid (5) a fastening member (10) for their connection is arranged.

2. The fastening pin for geosyntetics according to the claim 1, **characterized in that**, the flange (4) and the lid (5) are connected together by swinging joint (9).

3. The fastening pin for geosyntetics according to the claim 1, **characterized in that**, the shank body part is made as a tube (2).

4. The fastening pin for geosyntetics according to the claim 1, **characterized in that**, the tube (2) is shaped so as to increase the friction of its surface in the ground
